# EUROPÄISCHE PATENTSCHRIFT

(11) **EP 2 614 113 B1**
(45) Veröffentlichungstag und Bekanntmachung des Hinweises auf die Patenterteilung: **29.04.2015**
(21) Anmeldenummer: 11758119.9
(22) Anmeldetag: 19.08.2011
(51) Int. Cl.: C08K 3/22, F16L 47/00

(54) **KUNSTSTOFFROHRFORMTEIL**
PLASTIC TUBE MOLDED ARTICLE
ARTICLE MOULÉ D'UN TUYAU EN PLASTIQUE

(30) Priorität: 10.09.2010 DE 202010012461 U
(43) Veröffentlichungstag der Anmeldung: 17.07.2013
(73) Patentinhaber: Rehau AG + Co, 95111 Rehau (DE)
(72) Erfinder: SCHUBERT, Rainer, 95032 hof (DE); SIEBER, Jürgen, 91074 Herzogenaurach (DE); HENDEL, Roland, 91086 Aurachtal (DE); CIOLAK, Mariusz, 91052 Erlangen (DE); STEFFL, Udo, 95466 Weidenberg (DE)
(86) Internationale Anmeldenummer: PCT/EP2011/004173
(87) Internationale Veröffentlichungsnummer: WO 2012/031676

(56) Entgegenhaltungen:
- WO-A1-2004/078852
- NL-A- 6 610 634
- DATABASE WPI Week 198449 Thomson Scientific, London, GB; AN 1984-302886 XP002660863, & JP 59 187044 A (MITSUBISHI PETROCHEMICAL CO LTD) 24. Oktober 1984 (1984-10-24)

## Beschreibung

Die vorliegende Erfindung betrifft ein Kunststoffrohrformteil.

In der Haus- und Gebäudetechnik, insbesondere in der Kanal- und Kanalisationstechnik, finden häufig Rohre aus thermoplastischen Kunststoffen, insbesondere aus Polypropylen (PP), und entsprechende Rohrformteile Verwendung.

Aus dem Stand der Technik sind dazu insbesondere beispielsweise Abwasserrohre und Formteile aus Polypropylen (PP) bekannt, wobei das Polypropylen (PP) ungefüllt oder gefüllt sein kann, als Füllstoff wird dazu beispielsweise Kreide oder Talkum eingesetzt. Die Rohre und Rohrformteile sind mit Pigmenten eingefärbt. Dies erfolgt z.B. entsprechend des Kundenwunsches, nach üblichen Farbkennzeichnung von Rohren oder nach einschlägigen Vorschriften.

So ist aus der NL 6610634 bekannt, dass Polyesterfasern zur Verbesserung der Beständigkeit gegen Sonnenlicht Oxidpigmente mit Rutilstruktur enthalten.

Aus der JP 59 187 044 ist bekannt, Oxidpigmente mit Rutilstruktur zur Verbesserung der Wärmeformbeständigkeit von Polypropylenharzen einzusetzen.

Die WO 2004/078852 offenbart den Einsatz von Mischphasenoxidpigmenten mit Rutilstruktur als Pigmente in Kunststoffen.

Es hat sich als nachteilig herausgestellt, dass die Rohre bei ihrer Lagerung in einem Freilager oder auf der Baustelle der Sonneneinstrahlung ausgesetzt sind.

Durch das einseitige Einwirken der Sonneneinstrahlung auf die Rohre wird eine mehr oder weniger starke Längsbiegung hervorgerufen.

Besonders nachteilig ist dies, wenn die Rohre in bestimmten Lagersituationen beispielsweise nur an ihren Enden unterstützt sind, so dass zusätzlich zur Sonneneinstrahlung auch noch die Gewichtskraft des Rohres wirkt und damit eine noch stärkere Längsbiegung verursacht wird.

Derartige gekrümmte Rohre lassen sich nur sehr schwer in einem Plangefälle verlegen.

Soweit das herzustellende Gefälle bei der Rohrverlegung sehr gering ist, kann dies unter Umständen zu sog. Unterbögen führen, wodurch kein gleichmäßiges Gefälle mehr vorliegt.

In diesen Unterbögen kann es dann zu stehenden Fluiden kommen, die nachteilig auf den Gebrauchswert der Rohre sind, da dort Ablagerungen stattfinden, Anhaftungen festzustellen sind und dadurch eventuelle Geruchsbelästigungen eintreten.

Im Extremfall können solche Unterbögen zu Rückstau des Fluids im Rohrleitungssystem führen.

Hier setzt die Erfindung ein, die es sich zur Aufgabe gestellt hat, ein Kunststoffrohrformteil anzugeben, das sich bei Lagerung unter Sonneneinstrahlung weniger stark erwärmt und damit eine reduzierte Längsbiegung zeigt.

Darüber hinaus soll das erfindungsgemäße Kunststoffrohrformteil in einem einfachen Herstellungsprozess zugänglich sein und damit kostengünstig zur Verfügung gestellt werden können.

Diese Aufgaben werden durch ein Kunststoffrohrformteil mit den Merkmalen des Anspruchs 1 gelöst. Bevorzugte Ausführungsformen des erfindungsgemäßen Kunststoffrohrformteils sind in den davon abhängigen Ansprüchen beschrieben.

Der Begriff "Formteil" bezeichnet bei der vorliegenden Erfindung ein Rohr oder einen Rohrabschnitt sowie Fittinge eines Rohrsystems, insbesondere Abschlussstücke, Anschlusswinkel, Mehrfachverteiler, T-Stücke, Wand-T-Stücke, Wandwinkel, Winkelstücke, Systemübergänge, Übergangsstücke, gewinkelte Übergangsstücke, etc. Alle diese Formteile können mit oder ohne Gewinde ausgeführt sein.

Gemäß der vorliegenden Erfindung wurde erkannt, dass ein Kunststoffrohrformteil mit einer Wandung, die das Lumen des Kunststoffrohrformteils umgibt, die wenigstens eine Schicht aufweist und Polymermaterial enthält, die Aufgabe dadurch löst, dass ein Mischphasen-Oxidpigment mit Rutilstruktur, das ausgewählt ist aus einem Chromtitangelb, enthalten ist.

Ein Mischphasen-Oxidpigment mit Rutilstruktur, das ausgewählt ist aus einem Chromtitangelb, bewirkt, dass ein damit eingefärbtes Formteil bei Sonneneinstrahlung weniger stark Strahlung absorbiert und in Wärme umwandelt, als dies bei den Pigmenten der Fall ist, die herkömmlich zur Einfärbung eingesetzt werden.

Chromtitangelb ist in verschiedenen Farben von ocker bis gelbbraun erhältlich. Besonders bevorzugt ist eine Chromtitangelb, welches ein rotstichiges gelb aufweist. Diese ist besonders gut zur Einfärbung von Polymermaterialien für die Herstellung von Kunststoffrohrformteilen geeignet.

In einer geeigneten Abmischung mit weiteren Pigmenten kann damit die Farbe des Kunststoffrohrformteils entsprechend den Wünschen und gängigen Normen eingestellt werden, wobei der Vorteil einer geringeren Erwärmung und damit Durchbiegung des Rohres unter dem Einfluss von Sonneneinstrahlung resultiert.

Es ist besonders günstig, wenn ein Chromtitangelb gewählt wird, welches 79 bis 83 Gew.% Titandioxid, 3 bis 4 Gew.-% Chromoxid und 10 bis 12 Gew.-% Antimonoxid enthält.

Ein derartiges Chromtitangelb ist sehr stabil, physiologisch unbedenklich und zeigt eine hohe Färbekraft zur Einfärbung des damit versetzten Polymermaterials.

Neben Chromtitangelb gibt es weitere geeignete Mischphasen-Oxidpigments mit Rutilstruktur.

Geeignet zur Einfärbung von Polymermaterialien für die Herstellung von Kunststoffrohrformteilen sind auch
- Nickel-Titanate (enthaltend Nickel, Antimon und Titan) in einem grünstichigen gelb und
- Mangan-Titanate (enthaltend Mangan, Antimon und Titan) in einer braunen Farbe.

In einer günstigen Fortbildung der vorliegenden Erfindung enthält das Polymermaterial 0,1 bis 5 Gew.%, bevorzugt 0,2 bis 2 Gew.-% des Mischphasen-Oxidpigments mit Rutilstruktur, ausgewählt aus einem Chromtitangelb.

Damit lässt sich eine besonders kostengünstige und deckende Einfärbung des Polymermaterials erreichen.

Es hat sich weiterhin herausgestellt, dass es sehr vorteilhaft ist, wenn dem mit dem Mischphasen-Oxidpigment mit Rutilstruktur eingefärbten Polymermaterial weiterhin ein Titandioxid beigegeben wird, das einen Weißgrad nach DIN 6174 (Helligkeit CIE L*) von ≤ 75 aufweist.

In diesem Fall kommt es in einer synergistischen Wirkung dazu, dass die durch die Sonneneinstrahlung des Kunststoffrohrformteils verursachte Erwärmung des Polymermaterials noch weiter reduziert werden kann.

Es handelt sich bei diesem Titandioxid um ein sog. "dunkles Titandioxid", welches ein hohes Reflexionsvermögen für Sonnenstrahlung aufweist.

Dies bewirkt ebenso eine Reduzierung der Erwärmung des Kunststoffrohrformteils unter dem Einfluss der Sonneneinstrahlung.

Es hat sich dabei als besonders günstig erwiesen, wenn das Polymermaterial das Titandioxid mit einem Weißgrad nach DIN 6174 (Helligkeit CIE L*) von ≤ 75 zu 0,01 bis 1,0 Gew.-%, bevorzugt zu 0,02 bis 0,5 Gew.-% enthält.

Bei dieser Zusammensetzung wird eine besonders geringe Erwärmung des Kunststoffrohrformteils unter dem Einfluss der Sonneneinstrahlung festgestellt.

In einer vorteilhaften Weiterbildung der Erfindung kann vorgesehen sein, dass weitere Pigmente, umfassend anorganische und/oder organische Pigmente, im Polymermaterial enthalten sind.

Durch das Vorsehen von anorganischen und/oder organischen Pigmenten im Polymermaterial lassen sich Farben nach Belieben gemäß der Vorgaben des Kunden oder der einschlägigen Vorschriften darstellen.

Weiterhin kann in einer günstigen Ausbildung der Erfindung vorgesehen sein, dass im Polymermaterial Füllstoffe enthalten sind, die ausgewählt sind aus Calciumcarbonaten, Aluminium- oder Magnesiumhydroxiden, Calciumsulfaten, Silikaten, Kieselsäuren, Talkum, partikelförmigen Füllstoffen, umfassend sphärolitische und/oder faserförmige und/oder plättchenförmige und/oder stäbchenförmige Geometrien.

Damit kann das Polymermaterial in seinen mechanischen Eigenschaften sehr gut an die an das Kunststoffrohrformteil gestellten Ansprüche angepasst werden.

Als Polymermaterial kann ein Polyolefin, vorzugsweise ein Polypropylen (PP) oder ein Polyethylen (PE) oder ein Polybutylen (PB) oder ein vernetztes Polyolefin, vorzugsweise ein vernetztes Polyethylen (PE-X) oder ein Polyvinylchlorid oder ein Polyamid oder ein Polyester oder ein Polystyrol oder ein Polycarbonat oder ein Polyacetat oder ein Polyurethan oder ein ABS (Acrylnitril-Butadien-Styrol) oder ein Polyether oder ein Polyketon oder deren herstellbare Mischungen oder deren herstellbare Copolymerisate oder deren herstellbare Mischzusammensetzungen gewählt werden.

In der Regel ist vorgesehen, dass das Mischphasen-Oxidpigment mit Rutilstruktur, das Titandioxid, die anorganischen und / oder organischen Pigmente und die Füllstoffe im Polymermaterial gleichmäßig, also homogen verteilt sind.

Es kann aber vorteilhaft vorgesehen sein, wenn das Mischphasen-Oxidpigment mit Rutilstruktur und / oder das Titandioxid und / oder die anorganischen und / oder organischen Pigmente und / oder die Füllstoffe im Polymermaterial derart verteilt sind, dass diese an einer Außenoberfläche der Schicht konzentrierter sind, als innerhalb der Schicht oder an der Innenoberfläche der Schicht.

Die Verteilung des Mischphasen-Oxidpigments mit Rutilstruktur und / oder des Titandioxids und / oder der anorganischen und / oder organischen Pigmente und / oder der Füllstoffe im Polymermaterial kann aber auch so gewählt werden, dass sie an einer Innenoberfläche der Schicht konzentrierter sind, als innerhalb der Schicht oder an der Außenoberfläche der Schicht.

Auf diese Weise ist es möglich, die Wärmeaufnahme bei der Einstrahlung von Sonnenlicht sowie die mechanischen Eigenschaften des Kunststoffrohrformteils gezielt zu verbessern.

Schließlich umfasst die Erfindung auch das Vorsehen von weiteren Schichten, die auf der Schicht zum Lumen hin angeordnet sind. Diese Schichten können dafür vorgesehen sein, dass die Abriebbeständigkeit der Innenoberfläche verbessert wird, oder dass das Anhaften von Material an der Innenoberfläche reduziert wird, oder dass die Ausbildung eines Biofilms auf der Innenoberfläche verringert oder unterbunden wird. Es sind auch Schichten möglich, die besonders gut Wärme leiten, oder die Wärmeleitung begrenzen.

Es ist auch möglich, dass auf der Außenoberfläche Schichten angeordnet werden. Dies kann beispielweise eine Schutzschicht betreffen, die transparent oder transluzent ausgeführt ist und die Außenoberfläche vor mechanischen Einwirkungen schützt, ein anderes Beispiel kann eine Schicht betreffen, die Informationen trägt oder vermittelt.

Es ist auch umfasst, dass die zusätzlichen Schichten - gleich ob an der Innenoberfläche oder der Außenoberfläche vorgesehen - nur abschnittsweise angeordnet sind und somit den jeweils gestellten Anforderungen Rechnung trägt.

Aufgrund der günstigen Eigenschaften ist das erfindungsgemäße Kunststoffrohrformteil als Rohr oder Rohrformteil für den Transport von Flüssigkeiten und Gasen, bevorzugt außerhalb eines Gebäudes, in vielfältiger Weise einsetzbar.

So kann das erfindungsgemäße Rohr oder Rohrformteil beispielsweise Medien führend insbesondere in der Kanal- und Kanalisationstechnik, in der Trinkwasserinstallation für Warm- und Kaltwasser, in Gasleitungssystemen, in Industrierohrsystemen, und anderen Anwendungen eingesetzt werden.

Die Erfindung umfasst schließlich ein Rohrleitungssystem mit einem Kunststoffrohrformteil, wie oben beschrieben.

In einem Ausführungsbeispiel der vorliegenden Erfindung wurde ein Rohr aus Polypropylen hergestellt, das mit dem Mischphasen-Oxidpigment mit Rutilstruktur, mit Titandioxid und mit weiteren anorganischen und organischen Gelb- und Rotpigmenten eingefärbt wurde, wobei die Zusammensetzung dann zu einem Rohr DN/OD 200 extrudiert wurde.

Als Vergleichsbeispiel aus dem Stand der Technik wurde ein Rohr DN/OD 200 aus einem Polypropylen extrudiert, das mit Eisenoxidrot, organischen Pigmenten sowie Ruß in der gleichen Farbe wie das oben beschriebene erfindungsgemäße Beispiel eingefärbt wurde.

Beide Rohre wurden unter gleichen Bedingungen der Sonneneinstrahlung ausgesetzt. Nach 4 h wurde eine Vergleichsmessung der Temperatur vorgenommen.

Hierbei zeigte sich, dass das Rohr gemäß vorliegender Erfindung eine um 8 K niedrigere Oberflächentemperatur aufwies, als das Rohr in der herkömmlichen Zusammensetzung nach dem Stand der Technik (Vergleichsbeispiel).

Die Durchbiegung des Rohres gemäß vorliegender Erfindung war um 15 % gegenüber der Durchbiegung, die beim Rohr gemäß Vergleichsbeispiel ermittelt wurde, verbessert.

Die Vorteile, die sich mit der vorliegenden Erfindung erzielen lassen, sind damit offenkundig.

Die vorliegende Erfindung soll im Folgenden unter Bezugnahme auf die Figur im Detail erläutert werden.

Hierzu zeigt:

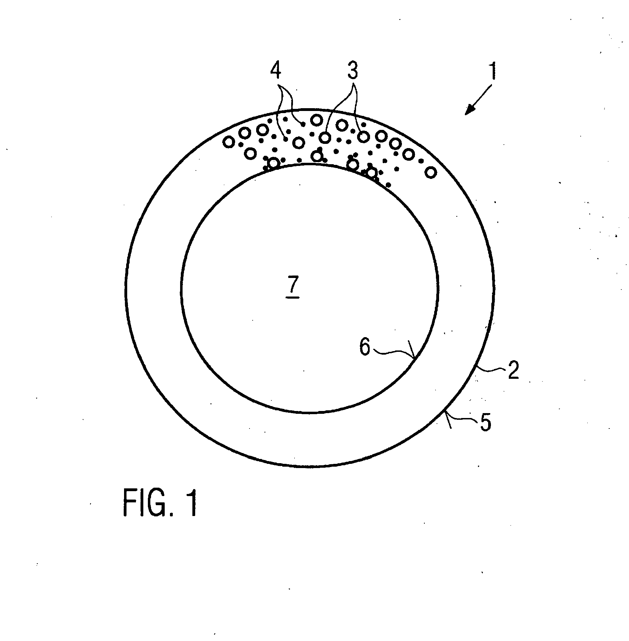

- Fig. 1: eine Querschnittsdarstellung eines Kunststoffrohrformteils gemäß einer Ausführungsform der vorliegenden Erfindung.

In Fig. 1 ist die Ausführungsform des erfindungsgemäßen Kunststoffrohrformteils in einer Querschnittsdarstellung gezeigt.

Das Kunststoffrohrformteil 1 ist aus einer Schicht 2 aufgebaut. Die Schicht 2 umgibt das Lumen 7 des erfindungsgemäßen Kunststoffrohrformteils 1.

In der Schicht 2 ist das Mischphasen-Oxidpigment mit Rutilstruktur 3 im Polymermaterial verteilt.

Die Verteilung des Mischphasen-Oxidpigments mit Rutilstruktur 3 im Polymermaterial der Schicht 2 ist im Wesentlichen homogen.

Weiterhin sind im Polymermaterial der Schicht 2 des erfindungsgemäßen Kunststoffrohrformteils 1 Titandioxid-Teilchen 4 verteilt.

Auch die Titandioxid-Teilchen 4 sind im Polymermaterial der Schicht 2 in etwa homogen verteilt.

Die Schicht 2 des Kunststoffrohrformteils 1 weist eine Innenoberfläche 6, die zum Lumen 7 des Kunststoffrohrformteils 1 hin orientiert ist, und eine Außenoberfläche 5, die vom Lumen 7 des Kunststoffrohrformteils 1 weg orientiert ist, auf.

Das Kunststoffrohrformteil 1 kann, wie in Fig. 1 gezeigt, als Rohr ausgebildet sein.

### Bezugszeichenliste

- 1: Kunststoffrohrformteil
- 2: Schicht
- 3: Mischphasenoxidpigment mit Rutilstruktur
- 4: Titandioxid
- 5: Außenoberfläche
- 6: Innenoberfläche
- 7: Lumen

## Patentansprüche

1. Kunststoffrohrformteil (1) mit einer Wandung, die das Lumen (7) des Kunststoffrohrformteils (1) umgibt, die wenigstens eine Schicht (2) aufweist und Polymermaterial enthält, in dem ein Mischphasenoxidpigment mit Rutilstruktur (3) enthalten ist, **dadurch gekennzeichnet, dass** das Mischphasenoxidpigment mit Rutilstruktur (3) ausgewählt ist aus einem Chromtitangelb.

2. Kunststoffrohrformteil (1) nach Anspruch 1, **dadurch gekennzeichnet, dass** das Chromtitangelb 79 bis 83 Gew.-% Titandioxid, 3 bis 4 Gew.% Chromoxid und 10 bis 12 Gew.% Antimonoxid enthält.

3. Kunststoffrohrformteil (1) nach einem der vorangehenden Ansprüche, **dadurch gekennzeichnet, dass** das Polymermaterial 0,1 bis 5, 0 Gew.-% des Mischphasenoxidpigments mit Rutilstruktur (3) enthält.

4. Kunststoffrohrformteil (1) nach Anspruch 3, **dadurch gekennzeichnet, dass** das Polymermaterial 0,2 bis 2,0 Gew.%, des Mischphasenoxidpigments mit Rutilstruktur (3) enthält.

5. Kunststoffrohrformteil (1) nach einem der vorangehenden Ansprüche, **dadurch gekennzeichnet, dass** das Polymermaterial ein Titandioxid (4) mit einem Weißgrad nach DIN 6174 (Helligkeit CIE L*) von ≤ 75 enthält.

6. Kunststoffrohrformteil (1) nach Anspruch 4, **dadurch gekennzeichnet, dass** das Polymermaterial das Titandioxid (4) mit einem Weißgrad nach DIN 6174 (Helligkeit CIE L*) von ≤ 75 zu 0,01 bis 1,0 Gew.% enthält.

7. Kunststoffrohrformteil (1) nach Anspruch 6, **dadurch gekennzeichnet, dass** das Polymermaterial das Titandioxid (4) mit einem Weißgrad nach DIN 6174 (Helligkeit CIE L*) von ≤ 75 zu 0,02 bis 0,5 Gew.-% enthält.

8. Kunststoffrohrformteil (1) nach einem der vorangehenden Ansprüche, **dadurch gekennzeichnet, dass** weitere Pigmente, umfassend anorganische und / oder organische Pigmente im Polymermaterial enthalten sind.

9. Kunststoffrohrformteil (1) nach einem der vorangehenden Ansprüche, **dadurch gekennzeichnet, dass** Füllstoffe, ausgewählt aus Calciumcarbonaten, Aluminium- oder Magnesiumhydroxiden, Calciumsulfaten, Silikaten, Kieselsäuren, Talkum, partikelförmigen Füllstoffe, umfassend sphärolitische und / oder faserförmige und / oder blättchenförmige und / oder stäbchenförmige Geometrien, im Polymermaterial enthalten sind.

10. Kunststoffrohrformteil (1) nach einem der vorangehenden Ansprüche, **dadurch gekennzeichnet, dass** das Polymermaterial ausgewählt ist aus einem Polyolefin, vorzugsweise einem Polypropylen (PP) oder einem Polyethylen (PE) oder einem Polybutylen (PB), einem vernetzten Polyolefin, vorzugsweise einem vernetzten Polyethylen (PE-X), einem Polyvinylchlorid, einem Polyamid, einem Polyester, einem Polystyrol, einem Polycarbonat, einem Polyacetat, einem Polyurethan, einem ABS (Acrylnitril-Butadien-Styrol), einem Polyether, einem Polyketon, deren herstellbare Mischungen, deren herstellbare Copolymerisate und deren herstellbare Mischzusammensetzungen.

11. Rohrleitungssystem mit einem Kunststoffrohrformteil (1) nach einem der Ansprüche 1 bis 10.

## Claims

1. Plastics pipe moulding (1) with a wall which surrounds the lumen (7) of the plastics pipe moulding (1), and which has at least one layer (2) and comprises polymer material in which a mixed-phase oxide pigment with rutile structure (3) is present, **characterized in that** the mixed-phase oxide pigment with rutile structure (3) is selected from a chromium titanium yellow.

2. Plastics pipe moulding (1) according to Claim 1, **characterized in that** the chromium titanium yellow comprises from 79 to 83% by weight of titanium dioxide, from 3 to 4% by weight of chromium oxide and from 10 to 12% by weight of antimony oxide.

3. Plastics pipe moulding (1) according to any of the preceding claims, **characterized in that** the polymer material comprises from 0.1 to 5.0% by weight of the mixed-phase oxide pigment with rutile structure (3).

4. Plastics pipe moulding (1) according to Claim 3, **characterized in that** the polymer material comprises from 0.2 to 2.0% by weight of the mixed-phase oxide pigment with rutile structure (3).

5. Plastics pipe moulding (1) according to any of the preceding claims, **characterized in that** the polymer material comprises a titanium dioxide (4) with whiteness ≤ 75 in accordance with DIN 6174 (CIE L* lightness).

6. Plastics pipe moulding (1) according to Claim 4, **characterized in that** the polymer material comprises from 0.01 to 1.0% by weight of titanium dioxide (4) with whiteness ≤ 75 in accordance with DIN 6174 (CIE L* lightness).

7. Plastics pipe moulding (1) according to Claim 6, **characterized in that** the polymer material comprises from 0.02 to 0.5% by weight of titanium dioxide (4) with whiteness ≤ 75 in accordance with DIN 6174 (CIE L* lightness).

8. Plastics pipe moulding (1) according to any of the preceding claims, **characterized in that** further pigments, comprising inorganic and/or organic pigments, are present in the polymer material.

9. Plastics pipe moulding (1) according to any of the preceding claims, **characterized in that** fillers selected from calcium carbonates, aluminium hydroxides or magnesium hydroxides, calcium sulphates, silicas, silicates, talc powder, particulate fillers, comprising spherolitic and/or fibrous and/or lamellar and/or elongate geometries, are present in the polymer material.

10. Plastics pipe moulding (1) according to any of the preceding claims, **characterized in that** the polymer material is selected from a polyolefin, preferably a polypropylene (PP) or a polyethylene (PE) or a polybutylene (PB), a crosslinked polyolefin, preferably a crosslinked polyethylene (PEX), a polyvinyl chloride, a polyamide, a polyester, a polystyrene, a polycarbonate, a polyacetate, a polyurethane, an ABS (acrylonitrile-butadiene-styrene), a polyether, a polyketone, mixtures that can be produced from these, copolymers that can be produced from these and mixed compositions that can be produced from these.

11. Piping system with a plastics pipe moulding (1) according to any of Claims 1 to 10.

## Revendications

1. Pièce moulée tubulaire en plastique (1) comprenant une paroi qui entoure la lumière (7) de la pièce moulée tubulaire en plastique (1), qui comprend au moins une couche (2) et contient un matériau polymère, dans lequel un pigment d'oxyde à phases mixtes de structure rutile (3) est contenu, **caractérisée en ce que** le pigment d'oxyde à phases mixtes de structure rutile (3) est choisi parmi un jaune de chrome-titane.

2. Pièce moulée tubulaire en plastique (1) selon la revendication 1, **caractérisée en ce que** le jaune de chrome-titane contient 79 à 83 % en poids de dioxyde de titane, 3 à 4 % en poids d'oxyde de chrome et 10 à 12 % en poids d'oxyde d'antimoine.

3. Pièce moulée tubulaire en plastique (1) selon l'une quelconque des revendications précédentes, **caractérisée en ce que** le matériau polymère contient 0,1 à 5,0 % en poids de pigment d'oxyde à phases mixtes de structure rutile (3).

4. Pièce moulée tubulaire en plastique (1) selon la revendication 3, **caractérisée en ce que** le matériau polymère contient 0,2 à 2,0 % en poids du pigment d'oxyde à phases mixtes de structure rutile (3).

5. Pièce moulée tubulaire en plastique (1) selon l'une quelconque des revendications précédentes, **caractérisée en ce que** le matériau polymère contient un dioxyde de titane (4) ayant un degré de blancheur selon DIN 6174 (luminosité CIE L*) ≤ 75.

6. Pièce moulée tubulaire en plastique (1) selon la revendication 4, **caractérisée en ce que** le matériau polymère contient le dioxyde de titane (4) ayant un degré de blancheur selon DIN 6174 (luminosité CIE L*) ≤ 75 à hauteur de 0,01 à 1,0 % en poids.

7. Pièce moulée tubulaire en plastique (1) selon la revendication 6, **caractérisée en ce que** le matériau polymère contient le dioxyde de titane (4) ayant un degré de blancheur selon DIN 6174 (luminosité CIE L*) ≤ 75 à hauteur de 0,02 à 0,5 % en poids.

8. Pièce moulée tubulaire en plastique (1) selon l'une quelconque des revendications précédentes, **caractérisée en ce que** des pigments supplémentaires, comprenant des pigments inorganiques et/ou organiques, sont contenus dans le matériau polymère.

9. Pièce moulée tubulaire en plastique (1) selon l'une quelconque des revendications précédentes, **caractérisée en ce que** des charges, choisies parmi les carbonates de calcium, les hydroxydes d'aluminium ou de magnésium, les sulfates de calcium, les silicates, les silices, le talc, les charges particulaires, comprenant les géométries sphérolitiques et/ou fibreuses et/ou lamellaires et/ou en bâtonnets, sont contenues dans le matériau polymère.

10. Pièce moulée tubulaire en plastique (1) selon l'une quelconque des revendications précédentes, **caractérisée en ce que** le matériau polymère est choisi parmi une polyoléfine, de préférence un polypropylène (PP) ou un polyéthylène (PE) ou un polybutylène (PB), une polyoléfine réticulée, de préférence un polyéthylène réticulé (PE-X), un poly-chlorure de vinyle, un polyamide, un polyester, un polystyrène, un polycarbonate, un polyacétate, un polyuréthane, un ABS (acrylonitrile-butadiène-styrène), un polyéther, une polycétone, leurs mélanges fabricables, leurs copolymères fabricables et leurs compositions mixtes fabricables.

11. Système de canalisation comprenant une pièce moulée tubulaire en plastique (1) selon l'une quelconque des revendications 1 à 10.
